# EUROPEAN PATENT APPLICATION

(11) **EP 4 737 511 A1**
(43) Date of publication of application: **06.05.2026**
(21) Application number: 24215894.7
(22) Date of filing: 27.11.2024
(51) Int. Cl.: C08K 5/00, A44B 1/02, A44B 19/26, A44B 99/00, C08J 5/00

(54) **A POLYAMIDE 6 COMPOSITION AND AN ARTICLE PREPARED THEREFROM**

(30) Priority: 30.10.2024 US 202418932076
(71) Applicant: Duraflex Hong Kong Limited, Central, Sheung Wan, Hong Kong (HK)
(72) Inventor: LEUNG, Hing Lun, Tsuen Wan (HK); LEUNG, Pui Kwan, Tsuen Wan (HK); LAU, Kam Ming, Tsuen Wan (HK); FUNG, Kai Kwun, Tsuen Wan (HK)
(74) Representative: P&TS SA (AG, Ltd.)

(57) **Abstract**

The present invention relates to a Polyamide 6 composition and an article prepared therefrom. The present invention relates to a composition for injection molding, comprising Polyamide 6 of a yellow color; and a whitener. The present invention also provides an injection molded accessory, such as a button, a zipper puller, a buckle, a cord lock, a cord end, and a stopper, comprising the composition. The present invention also provides a method for preparing an article, such as an accessory, comprising injection molding of the composition.

## Description

### FIELD OF THE INVENTION

The present invention relates to a composition for injection molding comprising Polyamide 6, an injection molded accessory comprising the composition, and a method for preparing an article from the composition.

### BACKGROUND OF THE INVENTION

Mechanically recycled pellets (RPA6) from Waste nylon fishing net are usually in high yellowness which is not good for producing colorful injection molded products.

RPA6 directly from mechanically recycling waste fishing net is not suitable for injection molding due to a low tensile strength.

Patent US20240117146A1 disclosed a recycled nylon from waste fishing net modified by carbon fiber which is black in color thus not suitable for producing colorful apparel or backpack accessories such as zipper pullers, or buckles. Other patents related to waste fishing net usually disclose technology to extract useful small molecular chemicals from waste fishing net as a way of recycling. For example, WO2024105472A2 disclosed a recovery of epsilon-caprolactam from nylon 6 comprising fishing nets.

There is a need for a Polyamide 6 composition with a low delta b value suitable for injection molding to produce trims or accessories for colorful apparel products. There is also a need to use recycled Polyamide 6 (RPA6) from mechanical recycling of a waste fishing net to produce apparel trims or accessories so that all the components of the apparel are made of recycled Polyamide 6. Then the whole used apparel can be melted directly to produce a new apparel product again, without dissasembling the trims or accessories first before melting, to achieve better sustainability (mono-material concept). The possible apparel accessories include a button, a zipper puller, a buckle, a cord lock, a cord end, a stopper, etc.

### SUMMARY

An objective of the invention is to provide a Polyamide 6 composition with a low yellowness. The yellowness can be evaluated with Hunter L, a, b or CIE 1976 L*a*b* (CIELAB) on a composition or an injection molded part. Color Delta b values can be used for evaluation of yellowness.

A further objective of the invention is to provide a Polyamide 6 composition suitable for injection molding.

A further objective of the invention is to provide an injection molded accessory selected from the group consisting of a button, a zipper puller, a buckle, a cord lock, a cord end, and a stopper, such as for a backpack or apparel, comprising PA6, without glass fiber, mineral fiber, or any other rigid fiber. It is desired that the accessory has an acceptable or improved tensile strength.

The present disclosure provides a composition for injection molding, comprising Polyamide 6 (PA 6) of a yellow color, preferably in a content of greater than 90% by weight on the basis of the total weight of the composition, and
a whitener, preferably polybutylene terephthalate (CAS No. 24968-12-5), preferably in a content of 2-4 phr (parts per hundred parts of resin).

The present disclosure provides an injection molded accessory, such as a button, a zipper puller, a buckle, a cord lock, a cord end, and a stopper, preferably for a backpack or apparel, comprising the composition of the disclosure, preferably without glass fiber, mineral fiber, or any other rigid fiber.

The present disclosure also provides a method for preparing an article, such as an accessory, comprising injection molding of the composition of the disclosure.

The composition has a low yellowness. The composition is suitable for injection molding. It is not necessary to add glass fibers, mineral fibers, or any other rigid fibers in the composition for injection molding. Accordingly, the composition is suitable for mono-material recycling loop, in which the whole used apparel can be melted directly to produce a new apparel product again, without dissasembling the trims or accessories first before melting. The trims or accessories made of the composition have acceptable or improved tensile strength.

### DETAILED DESCRIPTION

In one aspect, the present invention relates to a composition for injection molding, comprising
Polyamide 6 (PA 6) of a yellow color, and
a whitener.

The composition may comprise Polyamide 6 (PA 6) in a content of greater than 90% by weight on the basis of the total weight of the composition.

The composition may comprise a whitener in a content of 2-4 phr (parts per hundred parts of resin), 2-3.5 phr, or 3.5-4 phr.

The term "phr" means parts per hundred parts of resin, i.e., parts per hundred parts of PA 6, calculated on the weight basis.

Preferably, the whitener is polybutylene terephthalate (CAS No. 24968-12-5).

Without being bound to any theories, it is believed that polybutylene terephthalate can create a second independent phase in the PA6 phase to block certain yellow light reflection.

Polybutylene terephthalate can withstand the high temperature, such as 260-270 °C, in the process of injection molding, without causing yellowing.

The whitener may reduce the yellowness.

In one aspect, the composition further comprises a nucleation agent.

The composition may comprise a nucleation agent in a content of 0.3-1.2 phr, 0.3-0.6 phr, or 0.6-1.2 phr.

Preferably, the nucleation agent is 2, 2'- methylene-bis (4,6-di-tert-butyl-phenyl) phosphate sodium, Aluminium hydroxybis[2,2'-methylen-bis(4,6-di-tert-butylphenyl)phosphate], or 1,3:2,4-Di-p-methylbenyliedene sorbitol.

The nucleation agent may improve the injection molding smoothness of the composition.

The composition comprising the nucleation agent may provide an injection molded accessory, such as a buckle or zipper puller, with improved tensile strength as compared with a corresponding composition without the nucleation agent.

In one aspect, the composition further comprises a mold release.

The composition may comprise a mold release in a content of 2-3 phr.

Preferably, the mold release is polydimethylsiloxane, PE-WAX, Nylon-WAX, PET, Silicone oil, or PEG 1000 to PEG 8000.

The mold release may further improve the injection molding smoothness of the composition.

In one aspect, the composition further comprises a primary antioxidant.

The composition may comprise a primary antioxidant in a content of 0-0.2 phr.

Preferably, the primary antioxidant is a hindered phenol or a secondary aromatic amine, such as pentaerythritol tetrakis[3-[3,5-di-tert-butyl-4-hydroxyphenyl]propionate, octadecyl-3-[3,5-di-tert-butyl-4-hydroxyphenyl]propionate], 3,3',3',5,5',5'-hexa-tert-butyl-a,a',a'-(mesitylene-2,4,6-triyl)tri-p-cresol, calcium-bis (((3,5-bis(1,1-dimethylethyl)-4-hydroxyphenyl)methyl)-ethylphosphonate), bis (oxyethylene) bis-(3-(5-tert-butyl-4-hydroxy-m-tolyl)-propionate), 3,5-bis (1,1-dimethyl-ethyl)-4-hydroxy-C7-C9 branched alkyl esters, N,N'-(hexane-1,6-diyl)bis[3-(3,5-di-tert-butyl-4-hydroxyphenyl)propanamide], or their mixture.

In one aspect, the composition further comprises a secondary antioxidant.

The composition may comprise a secondary antioxidant in a content of 0-0.2 phr.

Preferably, the secondary antioxidant may be a phosphorus compound, such as tris(2,4-ditert-butylphenyl)phosphite, Bis(2.4-di-t-butylphenyl) Pentaerythritol Diphosphite, Tris(dipropyleneglycol) phosphite, Calcium bis[monoethyl(3,5-di-tert-butyl-4-hydroxylbenzyl)phosphonate], or their mixture.

In one aspect, the composition further comprise a dispersing agent.

The composition may comprise a dispersing agent in a content of 0.2 - 0.8 phr, 0.2 - 0.4 phr, or 0.4 - 0.8 phr.

Preferably, the dispersing agent is sodium stearate, sodium lauryl sulfate, ethoxylated alcohols, or PPG 1000 to PPG 4000.

In one aspect, the composition further comprises a primary anti-UV agent.

The composition may comprise a primary anti-UV agent in a content of 0-0.2 phr.

Preferably, the primary anti-UV agent is 2,2'-Methylenebis[6-(2H-benzotriazol-2-yl)-4-(1,1,3,3-tetramethylbutyl)phenol.

In one aspect, the composition further comprises a secondary anti-UV agent.

The composition may comprise a secondary anti-UV agent in a content of 0-0.2 phr.

Preferably, the secondary anti-UV agent is N,N',N",N‴-tetrakis(4,6-bis(butyl-(N-methyl-2,2,6,6-tetramethylpiperidin-4-yl)amino)triazin-2-yl)-4,7-diazadecane-1,10-diamine.

In one aspect, the Polyamide 6 is recycled Polyamide 6 from mechanical recycling of a waste fishing net.

For the mechanical recycling process, it may mainly include the following steps: mechanically breaking down into smaller pieces the products to be recycled, melting, extruding, and/or compounding.

The composition may be obtained by mixing all the components. Unless otherwise specified, all the components in the composition are intimately mixed.

In one aspect, the present invention relates to an injection molded accessory, such as a button, a zipper puller, a buckle, a cord lock, a cord end, and a stopper, preferably for a backpack or apparel, comprising the composition.

Preferably, the accessory does not comprise glass fiber, mineral fiber, or any other rigid fiber. Accordingly, the composition is suitable for mono-material recycling loop, in which the whole used apparel can be melted directly to produce a new apparel product again, without dissasembling the trims or accessories first before melting.

In one aspect, the present invention relates to a method for preparing an article, such as an accessory, e.g. a button, a zipper puller, a buckle, a cord lock, a cord end, and a stopper, comprising injection molding of the composition.

Preferably, the method comprises injection molding of the composition with a cycle time within 30 seconds.

### Examples

### Materials

PA6 used in the examples is recycled Polyamide 6 from mechanical recycling of a waste fishing net.

General Grade PA6 Novamid 1010C2 is a commercialized PA6 in the market, comprising additives.

Unmodified Mechanically recycled PA6 from waste fishing net is recycled Polyamide 6 from mechanical recycling of a waste fishing net without adding any additives.

### Preparation of the compositions

For each example, the composition was prepared by mixing all the components.

### Test procedure

The color delta b value is determined for the injection molded parts made of General Grade PA6 Novamid 1010C2, unmodified Mechanically recycled PA6 from waste fishing net, and the example compositions. The injection molded part made of General Grade PA6 Novamid 1010C2 is used as a reference. Hunter L, a, b and CIE 1976 L*a*b* (CIELAB) can be used to evaluate the color. The method of determining the color delta b values is known in the art.

The General Grade PA6 Novamid 1010C2, the unmodified mechanically recycled PA6 from waste fishing net, and the example compositions are used in injection molding for producing buckles or zipper pullers.

The tensile strength is tested for a buckle or zipper puller under a pulling speed at 300mm/min, at room temperature. The buckle or zipper puller is pulled untill it breaks or separates.

The shrinkage (sink mark) is observed with naked eyes for a buckle or zipper puller.

The compositions and test results are shown in Table 1.

**Table 1**

| | RPA6 from Fishing net | Whitener | Nucleation Agent | Dispersing Agent | Primary Antioxidant | Primary Antioxidant | Secondary Antioxidant | primary anti-UV agent | secondary anti-UV agent | Mold Release |
|---|---|---|---|---|---|---|---|---|---|---|
| | | PBT | 2,2'-methylene -bis (4,6-di-tert-butylphenyl) phosphate sodium | Sodium Stearate | Pentaerythritol tetrakis[3-[3,5-di-tert-butyl-4-hydroxyphenyl] propionate | N,N'-(hexane-1,6-diyl)bie[3-(3,5-di-tert-butyl-4-hydroxyphenyl )propanamide] | tris(2,4-ditert-butylphenyl )phosphite | 2,2'-Methylenebi s[6-(2H-benzotriazol -2-yl)-4-(1,1,3,3-tetramethylb utyl)phenol | N,N',N",N‴-tetrakis(4,6-bis(butyl-(N-methyl-2,2,6,6-tetramethylp iperidin-4-yl)amino)tri azin-2-yl)-4,7-diazadecane -1,10-diamine | Polydimeth ylsiloxane |
| | | | | | | | | UV-360 | UV-119 | |
| | % | phr | phr | phr | phr | phr | phr | phr | phr | phr |
| General Grade PA6 Novamid 1010C2 | | | | | | | | | | |
| Unmodified Mechanicall y recycled PA6 from waste fishing net | 100 | | | | | | | | | |
| Example 1 | 952 | 2 | 0.6 | 0.4 | 0 | | 0 | | | 2 |
| Example 2 | 93.9 | 3.5 | 0.6 | 0.4 | 0 | | 0 | | | 2 |
| Example 3 | 93.5 | 4 | 0.6 | 0.4 | 0 | | 0 | | | 2 |
| Example 4 | 943 | 3.5 | 0.3 | 0.2 | 0 | | 0 | | | 2 |
| Example 5 | 93 | 3.5 | 1.2 | 0.8 | 0 | | 0 | | | 2 |
| Example 6 | 93.5 | 3.5 | 0.6 | 0.4 | 0 | | 0 | | | 3 |
| Example 7 | 93 | 3.5 | 0.6 | 0.4 | 0 | | 0 | | | 3 |
| Example 8 | 932 | 3.5 | 0.6 | 0.4 | 0.2 | | 0.2 | 0.2 | 0.2 | 2 |
| Example 9 | 93.7 | 3.5 | 0.6 | 0.4 | 0 | 0.1 | 0.1 | | | 2 |

**Table 1-continued**

| | Product | Tensile Strength | Shrinkage (sink mark) | Product | Tensile Strength | Shrinkage (sink mark) | Color Delta b value |
|---|---|---|---|---|---|---|---|
| | | kg | | | kg | | |
| | | Industrial Standard >50kg | | | Industrial Standard > 12kg | | |
| | | kg | | % | kg | | |
| General Grade PA6 Novamid 1010C2 | Buckle | 103.9 | No | Zipper Puller | 22.9 | No | Reference |
| Unmodified Mechanically recycled PA6 from waste fishing net | Buckle | 84.2 | Yes | Zipper Puller | 22.8 | Yes | 9.64 |
| Example 1 | Buckle | 82.97 | No | Zipper Puller | 17.61 | No | 2.45 |
| Example 2 | Buckle | 98.86 | No | Zipper Puller | 17.88 | No | 2.88 |
| Example 3 | Buckle | 100.27 | No | Zipper Puller | 16.8 | No | 3.38 |
| Example 4 | Buckle | 100.39 | No | Zipper Puller | 18.99 | No | 237 |
| Example 5 | Buckle | 92.45 | No | Zipper Puller | 16.78 | No | 0.70 |
| Example 6 | Buckle | 104.53 | No | Zipper Puller | 16.65 | No | 2.54 |
| Example 7 | Buckle | 99.1 | No | Zipper Puller | 17.91 | No | 2.98 |
| Example 8 | Buckle | 104.83 | No | Zipper Puller | 16.72 | No | 4.80 |
| Example 9 | Buckle | 99.89 | No | Zipper Puller | 19.07 | No | 2.63 |

The unmodified mechanically recycled PA6 had a high color delta b value. All the examples comprising the whitener had a significantly reduced color delta b value.

The industrial standard is >50kg for tensile strength in buckles, and >12g for tensile strength in zipper pullers. All the examples met the industrial standard for tensile strength.

The unmodified mechanically recycled PA6 exhibited shrinkage (sink mark), but all the examples exhibited no shrinkage (sink mark).

Although the present invention is described with reference to the preferred embodiments, it is understood that various modifications are possible within the spirit or scope of the present invention.

## Claims

1. A composition for injection molding, comprising
Polyamide 6 (PA 6) of a yellow color, preferably in a content of greater than 90% by weight on the basis of the total weight of the composition, and
a whitener, preferably polybutylene terephthalate, preferably in a content of 2-4 phr (parts per hundred parts of resin).

2. The composition according to claim 1, further comprising a nucleation agent, preferably 2, 2'- methylene-bis (4,6-di-tert-butyl-phenyl) phosphate sodium, Aluminium hydroxybis[2,2'-methylen-bis(4,6-di-tert-butylphenyl)phosphate], or 1,3:2,4-Di-p-methylbenyliedene sorbitol, preferably in a content of 0.3-1.2 phr.

3. The composition according to claim 1, further comprising a mold release, preferably polydimethylsiloxane, PE-WAX, Nylon-WAX, PET, Silicone oil, or PEG 1000 to PEG 8000, preferably in a content of 2-3 phr.

4. The composition according to claim 1, further comprising a primary antioxidant, preferably a hindered phenol or a secondary aromatic amine, such as pentaerythritol tetrakis[3-[3,5-di-tert-butyl-4-hydroxyphenyl]propionate, octadecyl-3-[3,5-di-tert-butyl-4-hydroxyphenyl]propionate], 3,3',3',5,5',5'-hexa-tert-butyl-a,a',a'-(mesitylene-2,4,6-triyl)trip-cresol, calcium-bis (((3,5-bis(1,1-dimethylethyl)-4-hydroxyphenyl)methyl)-ethylphosphonate), bis (oxyethylene) bis-(3-(5-tert-butyl-4-hydroxy-m-tolyl)-propionate), 3,5-bis (1,1-dimethyl-ethyl)-4-hydroxy-C7-C9 branched alkyl esters, N,N'-(hexane-1,6-diyl)bis[3-(3,5-di-tert-butyl-4-hydroxyphenyl)propanamide], or their mixture, preferably in a content of 0-0.2 phr.

5. The composition according to claim 1, further comprising a secondary antioxidant, preferably a phosphorus compound, such as tris(2,4-ditert-butylphenyl)phosphite, Bis(2.4-di-t-butylphenyl) Pentaerythritol Diphosphite, Tris(dipropyleneglycol) phosphite, Calcium bis[monoethyl(3,5-di-tert-butyl-4-hydroxylbenzyl)phosphonate], or their mixture, preferably in a content of 0-0.2 phr.

6. The composition according to claim 1, further comprising a dispersing agent, preferably sodium stearate, sodium lauryl sulfate, ethoxylated alcohols, or PPG 1000 to PPG 4000, preferably in a content of 0.2-0.8 phr.

7. The composition according to claim 1, further comprising a primary anti-UV agent, preferably 2,2'-Methylenebis[6-(2H-benzotriazol-2-yl)-4-(1,1,3,3-tetramethylbutyl)phenol, preferably in a content of 0-0.2 phr.

8. The composition according to claim 1, further comprising a secondary anti-UV agent, preferably N,N',N",N‴-tetrakis(4,6-bis(butyl-(N-methyl-2,2,6,6-tetramethylpiperidin-4-yl)amino)triazin-2-yl)-4,7-diazadecane-1,10-diamine, preferably in a content of 0-0.2 phr.

9. The composition according to claim 1, wherein the Polyamide 6 is recycled Polyamide 6 from mechanical recycling of a waste fishing net.

10. An injection molded accessory selected from the group consisting of a button, a zipper puller, a buckle, a cord lock, a cord end, and a stopper, preferably for a backpack or apparel, comprising the composition according to claim 1, preferably without glass fiber, mineral fiber, or any other rigid fiber.

11. A method for preparing an article, such as an accessory selected from the group consisting of a button, a zipper puller, a buckle, a cord lock, a cord end, and a stopper, comprising injection molding of the composition according to claim 1, preferably with a cycle time within 30 seconds.
